Europäisches Patentamt

European Patent Office

Office européen des brevets

(11) Publication number : **0 578 464 A1**

(12) # EUROPEAN PATENT APPLICATION

(21) Application number : 93305249.0

(22) Date of filing : 05.07.93

(51) Int. Cl.$^5$ : **C08G 63/82, C08G 63/16**

(30) Priority : **07.07.92 JP 179800/92**

(43) Date of publication of application :
**12.01.94 Bulletin 94/02**

(84) Designated Contracting States :
**BE DE ES FR GB IT LU NL**

(71) Applicant : **POLYPLASTICS CO. LTD.**
**3-13, Azuchicho, 2-chome**
**Chuo-Ku Osaka-shi Osaka 541 (JP)**

(72) Inventor : **Kawaguchi, Kuniaki**
**2-4-2, Higashi-makado**
**Numazu-shi, Shizuoka (JP)**
Inventor : **Nakane, Toshio**
**885-11 Miyajima**
**Fuji-shi, Shizuoka (JP)**
Inventor : **Hijikata, Kenji**
**8-8, Fujimidai**
**Mishima-shi, Shizuoka (JP)**

(74) Representative : **Jackson, Peter**
**HYDE, HEIDE & O'DONNELL 10-12 Priests**
**Bridge**
**London SW15 5JE (GB)**

(54) **Process for the preparation of polyester resin.**

(57) A process for preparing a modified polyester or a composition thereof, which polyester or composition generates only a reduced amount of a decomposition gas when used at high temperature and only a reduced amount of a sublimate in melting, comprises reaction of an acid component mainly comprising a difunctional aromatic carboxylic acid or a lower alcohol ester thereof and a diol component, and at least one aromatic sulfonic acid derivative represented by the general formula (I) is added in an amount of 0.005 to 2 mole % based on the repeating ester units of the polyester prior to the completion of the polycondensation or after the completion of the polycondensation :

$$[H\text{-}(\text{-}OX\text{-})_n\text{-}O\text{-}]_{m1}\text{-}Ar\text{-}(SO_3PY_4)_{m2} \quad (I)$$

wherein Ar is a benzene or naphthalene ring ;
n is an integer of from 1 to 10 ;
$m_1$ and $m_2$ are each an integer of 1 to 2 ;
X is a group selected from among alkylene groups having 2 or 3 carbon atoms, with the proviso that when n or $m_1$ is 2 or above, a plurality of X groups may be the same or different from each other ; and
Y is an alkyl or alkylidene group with the proviso that a plurality of Y groups may be the same or different from each other.

EP 0 578 464 A1

This invention relates to a process for preparing a stable polyester which generates only a reduced amount of a decomposition gas when used at a high temperature or over a long period of time and only a reduced amount of a sublimate in melt-processing.

Aromatic polyesters, a typical example of which is polybutylene terephthalate, have excellent mechanical, electrical, chemical and physical properties as crystalline thermoplastic resins. Therefore, they have been used as engineering plastics for various purposes including use in components of automobiles and electrical and electronic equipment. They also have excellent odor-retention characteristics and water-vapor barrier properties and are therefore held to be important in the fields of, for example, containers and packaging of foods and cosmetics.

However, there is a problem in molding these polyesters that when such a polyester is heated in a molten state, a decomposition gas and a sublimate are generated due to the decomposition of the resin, which sometimes causes the formation of voids in the molded article or the adhesion of the resin to a mold, thus inducing contamination or corrosion. In a practical production system, an operation for molding a resin is not always continuously effected but an intermittent molding operation is frequently carried out. Since, in such a case, the resin is liable to be held in a molding machine in a molten state over a long period of time, the generation of a decomposition gas and a sublimate represents a serious problem.

On the other hand, when a molded article produced from such a polyester is used at a temperature of as high as around 100°C or above, a decomposition gas such as tetrahydrofuran is generated. As a result, in the case of an electric or electronics component such as a relay, a switch or a connector, the metallic contact of such a component is contaminated or corroded. In the case of a container or a packaging of, for example, food, drink or cosmetic, an offensive odor soaks into the contents or the taste of the contents is harmed. Thus it has been also urgently desired to reduce the amount of the gas generated from the molded article.

Under these circumstances, the present inventors have conducted extensive studies in order to give a modified polyester or a composition thereof which generates only a reduced amount of a decomposition gas when used at a high temperature and only a reduced amount of a sublimate in melting, thus achieving the present invention.

Accordingly, the present invention relates to a process for the preparation of a polyester resin or a composition thereof by reacting an acid component mainly comprising a difunctional aromatic carboxylic acid or a lower alcohol ester thereof with a diol component to form polyester, characterized in that at least one aromatic sulfonic acid derivative represented by the following general formula (I) is added in an amount of from 0.005 to 2 mole % based on the repeating ester units of the polyester at an arbitrary point of time from the preparation of monomers prior to the completion of the polycondensation or after the completion of the polycondensation:

$$[H-(-OX-)_n-O-]_{m1}-Ar-(SO_3PY_4)_{m2} \qquad (I)$$

wherein Ar is a benzene or naphthalene ring;

$n$ is an integer of from 1 to 10;

$m_1$ and $m_2$ are each an integer of 1 to 2;

X is a group selected from among alkylene groups having 2 or 3 carbon atoms, with the proviso that when $n$ or $m_1$ is 2 or above, a plurality of X groups may be the same or different from each other; and

Y is an alkyl or alkylidene group with the proviso that a plurality of Y groups may be the same or different from each other.

The polyester to be used in the present invention comprises as the main constituents ester units which are obtained from an acid component mainly comprising a difunctional aromatic carboxylic acid or a lower alcohol ester thereof and a diol component, and includes homopolyesters and copolyesters as a whole.

Examples of the difunctional aromatic carboxylic acid to be used as the main component in the present invention include terephthalic acid, 4,4'-biphenyldicarboxylic acid, 2,6-naphthalenedicarboxylic acid and 2,7-naphthalenedicarboxylic acid and lower alcohol esters thereof. Among these compounds, terephthalic acid or a lower alcohol ester thereof may be cited as a typical example thereof. Examples of the diol component to be used as the main component in the present invention include ethylene glycol, 1,3-propanediol, 1,4-butanediol, 1,5-pentanediol, 1,6-hexanediol and 1,4-cyclohexanedimethanol. Among these compounds, ethylene glycol or 1,4-butanediol, in particular, 1,4-butanediol may be cited as typical examples.

To prepare a copolyester, one or more well-known difunctional carboxylic acids such as isophthalic acid, phthalic acid, diphenic acid, adipic acid, sebacic acid and 1,4-cyclohexanedicarboxylic acid or dimethyl esters thereof or lower alcohol esters thereof can be used as acid component comonomers other than the above-mentioned main acid component. As diol component comonomers other than the above-mentioned main diol component, there can be used one or more well-known difunctional diols such as diethylene glycol, triethylene glycol, neopentyl glycol, 1,10-decanediol, 1,4-cyclohexanediol, p-xylylene glycol, alkylene oxide adducts of hydroquinone, alkylene oxide adducts of 2,2-bis(4-hydroxyphenyl)propane, alkylene oxide adducts of bis(4-hydroxyphenyl) sulfone and ethylene oxide adducts of 2,6-dihydroxynaphthalene. Further, halogen-substituted derivatives of these substances may be used as a comonomer in order to impart flame retardancy to the copolyester. These comonomer components are used preferably in an amount of 30 mole % or less, more preferably 20 mole % or less, based on the total amount of the repeating ester units. Furthermore, polyfunctional (trifunctional or higher) compounds such as trimesic acid, trimellitic acid or lower alcohol esters thereof, trimethylolpropane or pentaerythritol, monofunctional compounds such as stearyl alcohol, methyl o-benzoylbenzoate, or epoxy compounds, hydroxy carboxylic acid derivatives such as p-hydroxyethoxybenzenecarboxylic acid or polyalkylene glycols such as polypropylene glycol or polytetrahydrofuran can be used in a small amount or together with the above-mentioned comonomer components.

The process for the preparation of a polyester according to the present invention comprises esterifying or transesterifying the above-mentioned acid component monomer with the above-mentioned diol component monomer in the presence of a catalyst followed by polycondensation. The process is characterized in that an aromatic sulfonic acid derivative represented by the general formula (I) is added at an arbitrary point of time from the preparation of the monomers prior to the completion of the polycondensation or after the completion of the polycondensation.

Particular examples of the compound of the general formula (I) include
tetrapropylphosphonium 4-(2-hydroxyethoxy)-benzenesulfonate,
tetrabutylphosphonium 4-(2-hydroxyethoxy)-benzenesulfonate,
tetrabutylphosphonium 4-(2-hydroxypropoxy)-benzenesulfonate,
tetrabutylphosphonium 2,4-di(2hydroxyethoxy)-benzenesulfonate,
tetrabutylphosphonium 4-[2-(2-hydroxyethoxy)ethoxy]-benzenesulfonate,
tetrabutylphosphonium 2-(2-hydroxyethoxy)-naphthalene-6-sulfonate,
tetrabutylphosphonium 2-(2hydroxypropoxy)-naphthalene-6-sulfonate and
tetrabutylphosphonium 2-[2-(2-hydroxyethoxy)-ethoxy]naphthalene-6-sulfonate.

The aromatic sulfonic acid derivative represented by the above general formula (I) can be added at an arbitrary point of time of the melt polymerization, i.e., from the preparation of the monomers to the completion of the melt polymerization. Alternately, it may be added to the polyester resin after the completion of the polycondensation. It is particularly preferable that the aromatic sulfonic acid derivative be added during the first half of the melt polymerization, i.e., from the preparation of the monomers (for example, added to 1,4-butanediol) to the completion of the esterification or transesterification, till not later than the early stage of the polycondensation and contained in the reaction system. The aromatic sulfonic acid derivative represented by the above general formula (I) can be added in several portions at arbitrary points, if needed. The compound of the general formula (I) existing in the esterification, transesterification or polycondensation system constitutes no hindrance to the reactivity.

The aromatic sulfonic acid derivative represented by the above general formula (I) is added either singly or combinedly in an amount of from 0.005 to 2 mole % based on the repeating ester units. When it is added in an amount less than 0.005 mole %, only limited effects of reducing a decomposition gas generated when used at high temperature and the sublimate generated in melting can be achieved. When more than 2 mole % of the aromatic sulfonic acid derivative exists in the polycondensation system, the ultimate degree of polymerization of the polyester tends to decrease and thus the mechanical strength of the polyester is lowered. Thus neither of these cases is preferable.

As examples of the catalyst to be used for the preparation of the polyester of the present invention, well-known ones such as titanium compounds, tin compounds, antimony compounds, chromium compounds, manganese compounds, cobalt compounds, nickel compounds, copper compounds, zinc compounds, cadmium compounds, lead compounds, alkali metal compounds, alkaline earth metal compounds and aluminum compounds can be cited. One or more of these compounds can be used at an arbitrary point of time in the esterification, transesterification or polycondensation reaction. Together with the catalyst, stabilizers such as a sterically hindering phenol or other phosphorus compounds can be added.

The polyester of the present invention obtained by the melt polymerization has an intrinsic viscosity in o-chlorophenol at 25°C of about 0.5 to 1.2 (dl/g). Subsequently, it is solidified by cooling and powdered or pelletized. When it is needed to prepare a polyester of a high degree of polymerization, in particular, the polymer once solidified is heated in vacuo or in the presence of an inert gas at a temperature lower than its melting point to effect solid phase polymerization in a conventional manner. The degree of polymerization can be adjusted to a desired level by appropriately controlling, for example, the residence time or the treating temperature.

The polyester of the present invention can be formulated into a composition, if necessary, by adding one or more other thermoplastic resins, additives, organic fillers or inorganic fillers as auxiliary components during or after the completion of the polymerization, so long as the effects of the present invention are not deteriorated thereby. Examples of the thermoplastic resins include polyester elastomers, polyester resins other than those of the present invention, polyolefin resins, polystyrene resins, polyamide resins, polycarbonates, polyacetals, polyarylene oxides, polyarylene sulfides and fluororesins. Examples of the additives include well-known stabilizers such as UV absorbers and antioxidants, antistatic agents, flame retarders, flame-retardant aids, colorants such as dyes and pigments, lubricants, plasticizers, slip additives, mold release agents and nucleating agents. Examples of the inorganic fillers include glass fiber, milled glass fiber, glass beads, glass flake, silica, alumina fiber, zirconia fiber, potassium titanate fiber, carbon fiber, carbon black, graphite, silicates such as calcium silicate, aluminum silicate, kaolin, talc and clay, metal oxides such as iron oxide, titanium oxide, zinc oxide, antimony oxide and alumina, carbonates and sulfates of metals such as calcium, magnesium and zinc, silicon carbide, silicon nitride and boron nitride. Examples of the organic fillers include high-melting aromatic polyester fiber, liquid crystalline polyester fiber, aromatic polyamide fiber, fluororesins fiber and polyimide fiber.

When the polyester resin is used in electric or electronic components or in automobiles, there are a number of cases where a flame-retardant polyester is required depending on the environment of the use. In such a case, it is often required to add flame retarders or flame retardant aids. Suitable flame retarders include well-known halogen-containing examples, such as brominated polycarbonate, brominated epoxy compounds, brominated diphenyl and brominated diphenyl ether. Suitable flame retardant aids include antimony compounds such as antimony trioxide, antimony pentoxide and antimony halides, metal compounds containing zinc or bismuth, magnesium hydroxide or clayey silicates such as asbestos. In general, these flame retarders and flame retardant aids tend to accelerate the decomposition of polyester resins, thus frequently causing problems such as the generation of a gas. Therefore, the polyester resin obtained by the process of the present invention is particularly effective in these cases. To improve the effects of the present invention further, it is preferable to use stabilizers such as antioxidants in a suitable amount.

As has been described above, the modified polyester or a composition thereof according to the present invention has the advantage of generating only a reduced amount of a decomposition gas such as tetrahydrofuran when used at a high temperature or over a long period of time and is suitable for electric or electronics components such as a relay, a switch or a connector and containers and packagings for foods and cosmetics. Further, it has the further advantage of generating only a reduced amount of a sublimate in melting. These advantages make it very useful for industrial purposes.

## Examples

The following Examples illustrate the present invention in greater detail, and not by way of limitation. The characteristic properties of the products were evaluated by the following methods.

(1) Measurement of generated gas

An ASTM No. 1 tensile test piece was prepared under given conditions by injection molding and powdered into particles having a given size to prepare a sample. 5 g of the sample was allowed to stand in a 20-ml head space at 140°C for 2 hours. Then the gas thus generated was measured by gas chromatography. The weight of the generated gas was expressed in ppm based on the weight of the sample. The measurement conditions are as follows:

Device:          Yokogawa-Hewlett-Packard HP5890A.
Column:          HR-1701, 0.32 mm (diameter) x 30 m.
Column temp.:    50°C (1 min) - 5°C/min - 250°C (1 min).
Detector:        FID.

(2) Measurement of melt heating loss

Using a thermogravimetric analyzer (Perkin-Elmer TGA-7), 10 mg of a sample obtained by powdering pellets was melt-heated to 260°C in a nitrogen gas stream and the weight loss within 10 minutes (from 5 minutes to 15 minutes of melting) was determined.

Examples 1 to 3 and Comparative Examples 1 to 3

A reactor provided with a stirrer and a distillation column was throughly purged with nitrogen. Then 246 parts by weight of dimethyl terephthalate, 145 parts by weight of 1,4-butanediol, 0.64 part by weight (0.1 mole %) of tetrabutylphosphonium 4-(2-hydroxyethoxy)-benzenesulfonate (I-a) and 0.16 part by weight of titanium tetrabutoxide were introduced and the temperature was raised to 140°C under atmospheric pressure, followed by stirring. The temperature was slowly raised further and the methanol thus formed as a by-product was distilled off. When the amount of the distilled methanol exceeded 90% by weight of the calculated value and the transesterification had been almost completed, the temperature of the reaction mixture reached 200°C. Then it was transferred into another reactor and the pressure was reduced to 0.2 Torr (26.6 Pa) within 1 hour. At the same time, the reaction temperature was raised to 250°C. After stirring the mixture under the pressure of 0.2 Torr (26.6 Pa) for 2.5 hours, the molten product was extruded from a discharge port as a strand. Then the strand was cooled with water and passed under a hot air stream to remove water adherent thereto. After pelletizing, a polyester was obtained.

The intrinsic viscosity of the obtained polyester was measured in o-chlorophenol at 25°C and the above-mentioned properties thereof were further evaluated. As the result of the measurement of the generated gas, gases including 1-butene, tetrahydrofuran and 3-buten-1-ol were observed. Table 1 shows the results. For comparison, a sample prepared without using any aromatic sulfonic acid derivative (Comparative Example 1) and those prepared by using the compound (I-a) in an amount outside the range as specified in the present invention (Comparative Examples 2 and 3) were evaluated by the same methods. The results are also given in Table 1.

Examples 4 to 6 and Comparative Examples 4 and 5

Melt polymerization was effected in the same manner as the one described in Example 2 except that the tetrabutylphosphonium 4-(2-hydroxyethoxy)benzenesulfonate (I-a) used as the compound of the general formula (I) was replaced respectively with tetrabutylphosphonium 2,4-di(2-hydroxyethoxy)-benzenesulfonate (I-b), tetrabutylphosphonium 4-[2-(2-hydroxyethoxy)ethoxy]-benzenesulfonate (I-c) and tetrabutylphosphonium 2-(2-hydroxyethoxy)-naphthalene-6-sulfonate (I-d) to form a polyester from each of them. Table 2 shows the results. For comparison, samples prepared by using 4-methylbenzenesulfonic acid (I'-e) and sodium 4-hydroxybenzene-sulfonate (I'-f) each differing in structure from the one represented by the general formula (1) were similarly evaluated. The results are also given in Table 2.

Example 7 and Comparative Example 6

A reactor provided with a stirrer and a distillation column was thoroughly purged with nitrogen. Then 220 parts by weight of dimethyl 2,6-naphthalenedicarboxylate, 153 parts by weight of 1,4-butanediol, 0.56 parts by weight (0.1 mole %) of tetrabutylphosphonium 4-(2-hydroxyethoxy)benzenesulfonate (I-a) and 0.15 parts by weight of titanium tetrabutoxide were fed thereinto and the temperature was raised to 150°C under atmospheric pressure, followed by stirring. The temperature was slowly raised further and the methanol thus formed as a by-product was distilled off. When the amount of the distilled methanol exceeded 90% by weight of the calculated value and the transesterification had been almost completed, the temperature of the reaction mixture reached 210°C. Then it was transferred into another reactor and the pressure was reduced to 0.2 Torr (26.6 Pa) within 1 hour. At the same time, the reaction temperature was raised to 260°C. After stirring the mixture under the pressure of 0.2 Torr (26.6 Pa) for 2.0 hours, the molten product was extruded from a discharge port as a strand. Then the strand was cooled with water and passed under a hot air stream to thereby remove water adherent thereto. After pelletizing, a polyester was obtained.

The intrinsic viscosity of the obtained polyester was measured in o-chlorophenol at 25°C and the above-mentioned properties thereof were further evaluated. As the result of the measurement of the generated gas, gases including 1-butene, tetrahydrofuran and 3-buten-l-ol were observed. Table 3 shows the results. For comparison, a sample prepared without using any aromatic sulfonic acid derivative (Comparative Example 6) was evaluated by the same methods. The results are also given in Table 3.

Examples 8 and 9

In accordance with the conditions as specified in Example 2, similar evaluation was effected with varying the point of time of addition of compound (I-a). Table 4 shows the results.

Table 1

| | Arom. sulfonic acid deriv. | | Intrinsic viscosity (dl/g) | Generated gas (ppm) | | | | Melt-heating loss (%) |
|---|---|---|---|---|---|---|---|---|
| | type | amount (mole %) | | 1-butene | tetra-hydrofuran | 3-buten-1-ol | in total | |
| Comp. Ex. 1 | — | — | 0.77 | 0.08 | 188.01 | 0.78 | 191.26 | 0.093 |
| Comp. Ex. 2 | I-a | 0.002 | 0.77 | 0.07 | 160.30 | 0.77 | 163.04 | 0.090 |
| Ex. 1 | I-a | 0.02 | 0.78 | 0.04 | 29.09 | 0.63 | 31.01 | 0.061 |
| Ex. 2 | I-a | 0.1 | 0.77 | 0.0,4 | 28.44 | 0.63 | 31.11 | 0.062 |
| Ex. 3 | I-a | 1.0 | 0.76 | 0.04 | 27.59 | 0.62 | 29.91 | 0.061 |
| Comp. Ex. 3 | I-a | 2.5 | 0.59 | 0.05 | 29.33 | 0.63 | 31.26 | 0.063 |

EP 0 578 464 A1

Table 2

| | Arom. sulfonic acid deriv. | | Intrinsic viscosity (dl/g) | Generated gas (ppm) | | | | Melt-heating loss (%) |
|---|---|---|---|---|---|---|---|---|
| | type | amount (mole %) | | 1-butene | tetra-hydrofuran | 3-buten-1-ol | in total | |
| Ex. 2 | I-a | 0.1 | 0.77 | 0.04 | 28.44 | 0.63 | 31.11 | 0.062 |
| Ex. 4 | I-b | 0.1 | 0.78 | 0.03 | 30.06 | 0.63 | 32.10 | 0.060 |
| Ex. 5 | I-c | 0.1 | 0.77 | 0.04 | 29.14 | 0.61 | 30.39 | 0.062 |
| Ex. 6 | I-d | 0.1 | 0.78 | 0.04 | 31.30 | 0.70 | 33.44 | 0.063 |
| Comp. Ex. 4 | I'-e | 0.1 | 0.79 | 0.11 | 204.37 | 0.81 | 207.26 | 0.094 |
| Comp. Ex. 5 | I'-f | 0.1 | 0.75 | 0.08 | 191.22 | 0.77 | 194.11 | 0.093 |

EP 0 578 464 A1

Table 3

| | Arom. sulfonic acid deriv. | | Intrinsic viscosity (dl/g) | Generated gas (ppm) | | | | Melt-heating loss (%) |
|---|---|---|---|---|---|---|---|---|
| | type | amount (mole %) | | 1-butene | tetra-hydrofuran | 3-buten-1-ol | in total | |
| Ex. 7 | I-a | 0.1 | 0.80 | 0.02 | 20.06 | 0.44 | 24.19 | 0.060 |
| Comp. Ex. 6 | — | — | 0.80 | 0.02 | 160.08 | 0.66 | 163.31 | 0.089 |

Table 4

| | Point of addition of (I-a) | Intrinsic viscosity (dl/g) | Generated gas (ppm) | | | | Melt-heating loss (%) |
|---|---|---|---|---|---|---|---|
| | | | 1-butene | tetra-hydrofuran | 3-buten-1-ol | in total | |
| Ex. 2 | during prepn. of monomer | 0.77 | 0.04 | 28.44 | 0.63 | 31.11 | 0.062 |
| Ex. 8 | after transesterification (prior to polycondensn.) | 0.77 | 0.04 | 29.01 | 0.70 | 31.22 | 0.065 |
| Ex. 9 | polymer after polycondensn. | 0.76 | 0.05 | 56.32 | 0.72 | 60.37 | 0.071 |

EP 0 578 464 A1

## Claims

1. A process for the preparation of a polyester resin or a composition thereof by reacting an acid component mainly comprising a difunctional aromatic carboxylic acid or a lower alcohol ester thereof with a diol component to form a polyester, characterized in that at least one aromatic sulfonic acid derivative represented by the following general formula (I) is added in an amount of 0.005 to 2 mole % based on the repeating ester units of the polyester at an arbitrary point of time from the preparation of monomers prior to the completion of the polycondensation or after the completion of the polycondensation:

$$[H-(-OX-)_n-O-]_{m1}-Ar-(SO_3PY_4)_{m2} \qquad (I)$$

wherein Ar is a benzene or naphthalene ring;

n is an integer of from 1 to 10;

$m_1$ and $m_2$ are each an integer of 1 to 2;

X is a group selected from among alkylene groups having 2 or 3 carbon atoms, with the proviso that when n or $m_1$ is 2 or above, a plurality of X groups may be the same or different from each other; and

Y is an alkyl or alkylidene group with the proviso that a plurality of Y groups may be the same or different from each other.

2. A process as claimed in claim 1, wherein the polyester is a copolyester including components from one or more well-known difunctional carboxylic acids other than the main acid component and including components from one or more well-known difunctional diols, wherein the comonomer components are used in an amount of 30 mole % or less, based on the total amount of the repeating ester units.

3. A process as claimed in claim 1 or claim 2, wherein the aromatic sulfonic acid derivative (I) is selected from

tetrapropylphosphonium 4-(2-hydroxyethoxy)-benzenesulfonate,

tetrabutylphosphonium 4-(2-hydroxyethoxy)-benzenesulfonate,

tetrabutylphosphonium 4-(2-hydroxypropoxy)-benzenesulfonate,

tetrabutylphosphonium 2,4-di(2hydroxyethoxy)-benzenesulfonate,

tetrabutylphosphonium 4-[2-(2-hydroxyethoxy)ethoxy]-benzenesulfonate,

tetrabutylphosphonium 2-(2-hydroxyethoxy)-naphthalene-6-sulfonate,

tetrabutylphosphonium 2-(2hydroxypropoxy)-naphthalene-6-sulfonate and

tetrabutylphosphonium 2-[2-(2-hydroxyethoxy)-ethoxy]naphthalene-6-sulfonate.

4. A process as claimed in any of claims 1-3, wherein the aromatic sulfonic acid derivative (I) is added during the first stage of the melt polymerization, i.e., from the preparation of the monomers to the completion of the esterification or transesterification.

EP 0 578 464 A1

| European Patent Office | EUROPEAN SEARCH REPORT | Application Number |
|---|---|---|
| | | EP 93 30 5249 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 280 026 (TEIJIN LIMITED) <br> * page 7, line 6; claims 1-6,9 * <br> --- | 1-4 | C08G63/82 <br> C08G63/16 |
| A | DATABASE WPI <br> Week 7226, <br> Derwent Publications Ltd., London, GB; <br> AN 72-42209T <br> & JP-B-47 022 334 (UNIKITA LTD) <br> * abstract * <br> --- | 1 | |
| A | EP-A-0 076 998 (DOW CORNING CORPORATION) <br> * page 21, line 1 - line 14 * <br> ----- | 1 | |
| | | | TECHNICAL FIELDS SEARCHED (Int. Cl.5) <br><br> C08G |

The present search report has been drawn up for all claims

| Place of search | Date of completion of the search | Examiner |
|---|---|---|
| THE HAGUE | 29 OCTOBER 1993 | CATURLA VICENTE V. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document